# EUROPÄISCHE PATENTSCHRIFT

(11) **EP 3 173 817 B1**
(45) Veröffentlichungstag und Bekanntmachung des Hinweises auf die Patenterteilung: **06.05.2020**
(21) Anmeldenummer: 16199113.8
(22) Anmeldetag: 16.11.2016
(51) Int. Cl.: G01S 17/42, G01S 17/93, G01S 7/48

(54) **VERFAHREN ZUR DETEKTION UND LOKALISIERUNG EINER GARAGE UND KRAFTFAHRZEUG**
METHOD FOR DETECTING AND LOCATING A GARAGE AND MOTOR VEHICLE
PROCÉDÉ DE DÉTECTION ET DE LOCALISATION D'UN STATIONNEMENT ET VÉHICULE AUTOMOBILE

(30) Priorität: 20.11.2015 DE 102015015059
(43) Veröffentlichungstag der Anmeldung: 31.05.2017
(73) Patentinhaber: AUDI AG, 85045 Ingolstadt (DE)
(72) Erfinder: Schuller, Florian, 85737 Ismaning (DE); Haubner, Florian, 85049 Ingolstadt (DE)

(56) Entgegenhaltungen:
- DE-A1-102010 056 064
- DE-A1-102011 084 586
- DE-A1-102012 022 336

## Beschreibung

Die Erfindung betrifft ein Verfahren zur Detektion und Lokalisierung einer wenigstens einen Stellplatz für ein Kraftfahrzeug bietenden Garage in dem Kraftfahrzeug, wobei das Kraftfahrzeug wenigstens einen auf die Umgebung des Kraftfahrzeugs gerichteten, Abstandsdaten von Objektoberflächen zum Kraftfahrzeug liefernden Abstandssensor aufweist und wobei nach der Detektion und Lokalisierung abhängig von einer hierbei ermittelten Garageninformation eine Zielpose zum Abstellen des Kraftfahrzeugs auf wenigstens einem des wenigstens einen Stellplatzes bestimmt wird. Daneben betrifft die Erfindung ein Kraftfahrzeug.

Mit der fortschreitenden Entwicklung von Fahrerassistenzsystemen, insbesondere den verbesserten Möglichkeiten zur Umgebungserfassung in einem Kraftfahrzeug und zur Ermittlung fahrbarer Trajektorien, wurden für verschiedene Fahrsituationen einsetzbare Parkassistenzsysteme vorgeschlagen. Diese ermitteln unter Nutzung von Umgebungssensoren mögliche Stellplätze für ein Kraftfahrzeug und ermitteln Trajektorien, die es erlauben, das Kraftfahrzeug in einer geeigneten Zielpose, also Zielposition und Zielorientierung, auf dem Stellplatz abzustellen. Die hierbei ermittelten Trajektoriendaten können zum einen genutzt werden, um entsprechende, den manuellen Betrieb des Kraftfahrzeugs leitende Fahrerinformationen auszugeben, zum anderen aber auch, um das Kraftfahrzeug unter Nutzung eines zur wenigstens teilweise automatischen Führung des Kraftfahrzeugs ausgebildeten Fahrzeugsystems wenigstens teilweise automatisch in die Zielpose auf dem Stellplatz zu verbringen.

Eine besondere Herausforderung für derartige Fahrerassistenzsysteme, die Fahrer beim Einparken unterstützen sollen, sind Stellplätze in Garagen. Um eine Garage und mithin einen geeigneten Stellplatz zu erkennen, ist es im Stand der Technik bekannt, ein Modell des Innenraums von Garagen zu verwenden, um eine Garage als solche zu erkennen und zu lokalisieren. Hierbei ist es jedoch notwendig, das Kraftfahrzeug vor der Detektion und Lokalisierung der Garage und vor der darauf folgenden Bestimmung der Zielpose bereits so abzustellen, dass die verwendeten Umgebungssensoren, insbesondere Kameras, die Garage hinreichend vollständig und aus einem geeigneten Winkel erfassen können. Dabei ist es insbesondere nötig, dass das Kraftfahrzeug bereits unweit der Zielpose, mit der Front in Richtung des Garageninnenraums zeigend, angehalten wird. Wird der Innenraum erkannt, wird zum geführten und/oder automatisierten Parken eine Zielpose bestimmt und der Parkvorgang kann, insbesondere vom Fahrer überwacht, durchgeführt werden.

Problematisch an einer Detektion und Lokalisierung einer Garage anhand eines Modells des Innenraums der Garage ist, dass das Modell aufgrund der unterschiedlichen Möglichkeiten und Ausgestaltungen von Innenräumen, insbesondere bei individuellen Veränderungen, sehr große Abweichungen tolerieren muss. Beispielsweise stellen Benutzer von Garagen in dieser häufig Gegenstände ab, beispielsweise Schränke, Fahrräder, Kartons und dergleichen, die nicht nur Abweichungen von der erwarteten Grundform des Innenraums einer Garage mit sich bringen, sondern auch zu Abschattungen führen können, die die vollständige Abtastung des Innenraums nicht länger erlauben. Die unscharfen Innenraummodelle können mithin zu Falschdetektionen führen, da in der Umgebung des Kraftfahrzeugs ähnliche Formen mit abstandsgebender Sensorik detektiert werden können (beispielsweise Zwischenräume zwischen Häusern, anderen Fahrzeugen und dergleichen).

Um trotzdem ein unterstütztes, insbesondere automatisiertes Einparken in eine Garage zu ermöglichen, muss das Kraftfahrzeug, wie bereits erwähnt, bereits gut ausgerichtet in einem geringen Abstand vor der Garage stehen, damit die Erkennung auf einen kleinen Bruchteil der Umgebung reduziert werden kann, wodurch das Falschdetektionsproblem umgangen wird. Ein automatisches Einparken in eine Garage ist deswegen aus höheren Distanzen und bei ungenauer Ausrichtung des Kraftfahrzeugs nicht möglich. Ferner tritt das Problem auf, dass die Berechnung der Zielpose aufgrund der wenigen verfügbaren Informationen nicht hinreichend robust erfolgen kann, so dass insbesondere eine Orientierung an der vorherigen Pose des Kraftfahrzeugs vorgenommen wird. Hieraus können nicht optimale Zielposen resultieren, durch die ein Parkmanöver verhindert wird und/oder ein Funktionsabbruch auftritt.

Ein zusätzliches Problem entsteht dadurch, dass in vielen Situationen ein gerades Anfahren auf die Garage zu nicht möglich ist, so dass die Funktion aufgrund der Unmöglichkeit der beschriebenen Positionierung des Kraftfahrzeugs gar nicht einsetzbar wäre. Ein Verfahren zum automatisierten Bewegen eines Fahrzeugs von einer Ausgangsposition außerhalb einer Garage zu einer Zielposition innerhalb einer Garage ist aus DE 10 2010 056 064 A1 bekannt.

Der Erfindung liegt daher die Aufgabe zugrunde, ein demgegenüber verbessertes Verfahren zur Detektion und Lokalisierung einer Garage anzugeben, welches insbesondere ohne eine definierte Ausrichtung des Kraftfahrzeugs zu der Garage und auch aus größeren Abständen verlässliche Ergebnisse liefert.

Zur Lösung dieser Aufgabe ist bei einem Verfahren der eingangs genannten Art erfindungsgemäß vorgesehen, dass die Abstandsdaten zur Detektion eines sich öffnenden Garagentors anhand eines Öffnungskriteriums ausgewertet werden, wobei bei erfülltem Öffnungskriterium eine Garage detektiert und anhand der aus den Abstandsdaten ableitbaren Position des Garagentors eine Lokalisierungsinformation der Garage als Teil der Garageninformation bestimmt wird.

Erfindungsgemäß wird mithin vorgeschlagen, Sensordaten von Abstandssensoren als Umgebungssensoren, also Abstandsdaten, zu nutzen, um zu detektieren, dass und wo eine Öffnung eines Garagentors vorliegt. Das hat den Vorteil, dass die Garage lediglich während des Öffnungsvorgangs im Sichtbereich der Abstandssensoren liegen muss, der ohnehin meist weiter gewählt werden kann als der beispielsweise einer Kamera. Folglich kann das Kraftfahrzeug auch aus größeren Entfernungen und mit verschiedenen Ausrichtungen die Garage erkennen. Abstandsdaten lassen sich auf einfache Art und Weise auswerten, so dass eine robuste Überwachung auf Öffnungsvorgänge erfolgen kann, die insbesondere auf die Detektion von für das Öffnen eines Garagentors typischen Veränderungen in der Umgebung des Kraftfahrzeugs abstellt. Mit Hilfe des detektierten Öffnungsvorgangs werden auch der Ort und die Ausrichtung des Garagentors in der Umgebung präzise und robust erkannt, so dass eine zuverlässige Zielpose mit sicherer Ausrichtung, mithin Zielorientierung, des Kraftfahrzeugs berechnet werden kann. Dabei kann eine sichere Ausrichtung beispielsweise dadurch definiert sein, dass das Heck des Kraftfahrzeugs in der Zielpose parallel zu dem Längsverlauf des Garagentors ausgerichtet ist.

Der Erfindung liegt dabei die Erkenntnis zugrunde, dass sich, insbesondere bei einer zweidimensionalen Betrachtung, durch Öffnungsvorgänge von Garagentoren auftretende Veränderungen in den Abstandsdaten besonders leicht erkennen und als Öffnung eines Garagentors klassifizieren lassen. Hierbei kann im Übrigen insbesondere vorgesehen sein, dass ausschließlich Abstandsdaten von Abstandssensoren verwendet werden, denn Bilddaten, beispielsweise einer Kamera, sind im Rahmen der vorliegenden Erfindung nicht notwendig.

Das hier vorgestellte Verfahren ist robust gegenüber Veränderungen im Innenraum der Garage. Letztlich ist im Rahmen der vorliegenden Erfindung ein mehrstufiges Vorgehen vorteilhaft, wie im Folgenden noch näher diskutiert werden wird, in dem letztlich Kandidaten für Garagentore in der Umgebung des Kraftfahrzeugs überwacht und auf Öffnungsvorgänge hin analysiert werden, welche dann auch entsprechend plausibilisiert werden können. Die Anzahl der Fehldetektionen wird durch das mehrstufige Verfahren und die Beobachtung der Umgebung stark reduziert.

Es sei an dieser Stelle noch darauf hingewiesen, dass das Öffnungskriterium an sich auch bereits eine Plausibilisierung, dass es sich um eine Garage handelt, umfassen kann, wobei während der Plausibilisierung bevorzugt Abstandsdaten des Innenraums der Garage ausgewertet werden können und auch überprüft werden kann, ob überhaupt ein für das Kraftfahrzeug geeigneter Stellplatz in der Garage existiert. So kann beispielsweise das Öffnungskriterium auch so ausgestaltet werden, dass keine (einen Stellplatz für das Kraftfahrzeug enthaltende) Garage detektiert wird, falls der innerhalb der Garage befindliche Stellplatz bereits durch ein anderes Kraftfahrzeug belegt ist und dergleichen. Auch hierauf wird im Folgenden noch genauer eingegangen werden. Das bedeutet, das Öffnungskriterium muss nicht zwangsläufig nur die Auswertung der Abstandsdaten zur Detektion einer sich öffnenden Garage umfassen, sondern kann ferner weitere Auswertungen zur Plausibilisierung, dass tatsächlich eine für ein Einparken geeignete Garage vorliegt, enthalten.

In besonders vorteilhafter Ausgestaltung der vorliegenden Erfindung kann als wenigstens ein Abstandssensor ein Laserscanner, insbesondere ein 2D-Laserscanner zur Abtastung der Umgebung in einer in einer Höhe über dem befahrenen Untergrund liegenden Ebene, verwendet werden. Die Abstandsdaten von Laserscannern, insbesondere von den beschriebenen 2D-Laserscannern, haben sich als besonders geeignet für die erfindungsgemäß im Öffnungskriterium vorgenommene Auswertung erwiesen, da sich auf einen Öffnungsvorgang hinweisende Veränderungen der Umgebung besonders einfach ablesen lassen. Insbesondere kann das Verfahren basierend ausschließlich auf den Abstandsdaten eines Laserscanners, insbesondere eines 2D-Laserscanners, durchgeführt werden. Es sind jedoch auch Ausführungsbeispiele denkbar, in denen andere Arten von Abstandssensoren eingesetzt werden, beispielsweise Ultraschallsensoren, Abstandsdaten aus 3D-Kameras bzw. aus Structure-from-Motion-Verfahren und dergleichen.

Es ist ferner besonders vorteilhaft, wenn ein horizontaler Öffnungswinkel des Erfassungsbereichs wenigstens eines des wenigstens einen Abstandssensors, insbesondere eines auf das Vorfeld des Kraftfahrzeugs gerichteten Abstandssensors, größer als 120° ist, insbesondere größer als 140°, und/oder durch eine Mehrzahl von Abstandssensoren die Umgebung des Kraftfahrzeugs in einem 360°-Winkelintervall vermessbar ist. Auf diese Weise lässt sich ein besonders großer Anteil der Umgebung des Kraftfahrzeugs abtasten, was die Zahl an Ausrichtungen des Kraftfahrzeugs zur Garage, in denen diese detektierbar und lokalisierbar ist, deutlich erhöht. Insbesondere bei einer 360°-Abtastung der Umgebung des Kraftfahrzeugs können potentielle Garagentore in jeder Richtung vom Kraftfahrzeug aus auf einen Öffnungsvorgang überwacht werden. Dabei sei darauf hingewiesen, dass insbesondere Laserscanner als Abstandssensoren meist ohnehin einen äußerst großen Öffnungswinkel des Erfassungsbereichs aufweisen, beispielsweise von bis hin zu 160°, so dass hier bereits durch einen einzigen Abstandssensor ein großer Anteil der Umgebung des Kraftfahrzeugs erfasst werden kann.

Eine zweckmäßige Weiterbildung des erfindungsgemäßen Verfahrens sieht vor, dass während einer Überwachungsphase potentielle geschlossene Garagentore anzeigende Kandidatenstrukturen in den Abstandsdaten identifiziert werden und mittels des Öffnungskriteriums auf eine das Öffnen eines Garagentors anzeigende Veränderung überwacht werden. Das bedeutet also, die Abstandsdaten werden strukturell ausgewertet, um Kandidatenstrukturen zu identifizieren, die ein Garagentor darstellen könnten. Tritt nun an diesen Kandidatenstrukturen eine Veränderung auf, kann diese dahingehend ausgewertet werden, ob es sich tatsächlich um das Öffnen eines Garagentors handelt, was innerhalb des Öffnungskriteriums geschieht. Durch dieses Vorgehen ist letztlich bereits eine mehrstufige Detektion gegeben, denn zunächst findet eine allgemeine Klassifizierung von Strukturen in den Abstandsdaten als Kandidatenstrukturen für Garagentore statt, welche dann vorteilhaft kontinuierlich überwacht werden, um bei einer auftretenden Veränderung durch erneute Auswertung zu überprüfen, ob es sich um einen Öffnungsvorgang eines Garagentors handelt. Auf diese Weise wird das Verfahren robuster und die Anzahl der Fehldetektionen wird reduziert.

Eine besonders einfache und robuste Realisierbarkeit des erfindungsgemäßen Verfahrens ergibt sich, wenn zur Extraktion von Kandidatenstrukturen eine sich insbesondere auf eine bestimmte Höhe über dem befahrenen Untergrund bezogene, aus dem Untergrund emporragende Objekte in der Umgebung des Kraftfahrzeugs in ihrem horizontalen Verlauf beschreibende Umgebungskontur aus den Abstandsdaten ermittelt wird, wobei wenigstens ein Klassifikator zur Identifikation von Kandidatenstrukturen in der Umgebungskontur verwendet wird. Dabei kann eine derartige Umgebungskontur letztlich bereits unmittelbar von dem Abstandssensor als Abstandsdaten geliefert werden, beispielsweise, wenn, wie als bevorzugt angegeben, ein 2D-Laserscanner verwendet wird, der entsprechend seiner Verbauhöhe eine horizontale, dem vom Kraftfahrzeug befahrenen Untergrund parallele Ebene auf Objekte abtastet. Bei einer derartigen Umgebungskontur handelt es sich um eine einfach verständliche und in der Datenverarbeitung einfach verarbeitbare zweidimensionale Gesamtstruktur, in der mithilfe eines Klassifikators leicht Kandidatenstrukturen, die für ein Garagentor infrage kommen, identifiziert werden können. Die Umgebungskontur, insbesondere gegeben durch einen 2D-Laserscanner, lässt sich im Prinzip mit einem Schnitt in einer horizontalen Ebene durch die Objekte in der Umgebung des Kraftfahrzeugs, somit einer Art Draufsicht, vergleichen.

Dabei sei an dieser Stelle darauf hingewiesen, dass es in Ausführungsbeispielen des erfindungsgemäßen Verfahrens durchaus auch denkbar ist, mehrere parallele, verschiedenen Höhen zugeordnete horizontale Ebenen und somit Umgebungskonturen zu betrachten und auszuwerten. Bevorzugt ist es jedoch, eine bodennahe, insbesondere durch die Verbauhöhe eines 2D-Laserscanners als Abstandssensor definierte Ebene und somit Umgebungskontur zu betrachten.

In diesem Kontext sieht eine besonders bevorzugte Ausgestaltung vor, dass wenigstens einer des wenigstens einen Klassifikators eine erste Mindestlänge überschreitende, gerade Teilstrecken in der Umgebungskontur detektiert und/oder wenigstens einer des wenigstens einen Klassifikators einen zwischen zwei gleichartigen Begrenzungsstrukturen zurückgesetzt befindlichen Streckenabschnitt einer zweiten Mindestlänge in der Umgebungskontur detektiert. Dabei wird die Mindestlänge zweckmäßig in Abhängigkeit der Fahrzeugbreite gewählt, bevorzugt also größer als die Breite des Kraftfahrzeugs.

Denn zunächst einmal kommen als Garagentore und somit Kandidatenstrukturen alle geraden Strecken in der Umgebungskontur infrage, die länger als eine Fahrzeugbreite sind, denn sie könnten ein potentielles Garagentor markieren. Verschwindet im späteren Verlauf eine derartige Strecke wenigstens teilweise, sei es im Sinne einer Verschiebung oder gänzlich, kann auf einen Öffnungsvorgang zu einer einen Stellplatz bietenden Garage hin untersucht werden. Verlässlichere Kandidaten für potentielle Garagentore können durch eine genauere Betrachtung von Strukturen und entsprechende Klassifikatoren als Kandidatenstrukturen zur Überwachung markiert werden. Viele Garagentore sind nicht bündig mit der Außenwand der Garage, sondern etwas zurückgesetzt, was zu einer typischen Garagenkontur führt. Bei einer solchen typischen Garagenkontur liegt eine eine zweite Mindestlänge, die auch der ersten Mindestlänge entsprechen kann, überschreitende Strecke zurückgesetzt zwischen gleichartigen Begrenzungsstrukturen, so dass ein Klassifikator die Umgebungskontur gezielt nach derartigen Kandidatenstrukturen durchsuchen kann. Selbstverständlich sind auch andere Klassifikatoren, die typischerweise gegebene oder potentielle mögliche Garagenkonturen beschreiben, möglich. Es sei bereits an dieser Stelle darauf hingewiesen, dass gespeichert werden kann, welcher wenigstens eine Klassifikator für die Kandidatenstruktur erfüllt ist, was zu einem späteren Zeitpunkt, beispielsweise bei einer Plausibilitätsprüfung, die Wahrscheinlich für eine detektierte Garage erhöhen kann, je eher die Kandidatenstruktur eine typische Garagenkontur beschreibt.

Dabei kann, wie bereits angedeutet wurde, als zu überwachende Veränderung mit besonderem Vorteil ein wenigstens teilweiser, insbesondere die erste bzw. die zweite Mindestlänge überschreitender, Wegfall der Teilstrecke und/oder des Streckenabschnitts verwendet werden. Wird dort, wo sich zu einem vorherigen Zeitpunkt noch ein potentielles zu öffnendes Garagentor befand, nun nichts mehr festgestellt, kann auf eine Bewegung des Garagentors, insbesondere eine Öffnung, geschlossen werden. Dabei ist selbstverständlich idealerweise zu überprüfen, ob die entstehende Öffnung auch groß genug ist, dass das Kraftfahrzeug in seiner Breite hindurchpasst, mithin in die potentielle Garage gelangen kann. Dies kann wiederum aufgrund der ersten bzw. zweiten Mindestlänge geschehen, wobei insbesondere die erste Mindestlänge auch der zweiten Mindestlänge entsprechen kann.

Dabei sei bereits an dieser Stelle darauf hingewiesen, dass nicht unbedingt zwei unmittelbar aufeinanderfolgende Zeitpunkte hinsichtlich einer solchen Veränderung überwacht werden müssen, sondern durchaus auch zeitlich länger beabstandete Momentaufnahmen der Umgebungskontur, konkret der Kandidatenstruktur, betrachtet werden können, da viele Garagentore bei ihrer Öffnung zunächst noch in der Ebene der Umgebungskontur derart verbleiben, dass ein Gelangen in die Garage weiterhin unmöglich erscheint, schließlich jedoch die überwachte horizontale Ebene verlassen und somit den Weg als "frei" anzeigen. Ein anderer Faktor, der für eine zeitlich längerfristige Überwachung spricht, ist, dass beispielsweise beim Öffnen eines Garagentors zusätzliche, die Kontur weiter verändernde und gegebenenfalls blockierend wirkende Objekte auftreten können, beispielsweise ein vor dem Garagentor stehender Mensch, der dieses betätigt und als Konturabschnitt auch in den Umgebungskonturen auftaucht, den Weg in die Garage jedoch nach dem Öffnen des Garagentors üblicherweise freigeben wird. Gleiches gilt für temporär vor der Garage abgestellte Gegenstände, beispielsweise Einkaufstaschen. Als zweckmäßig hat es sich in diesem Kontext erwiesen, wenn zur Überwachung auf eine Veränderung hin als Referenzzustand die Kandidatenstruktur zum Zeitpunkt ihrer Klassifizierung als eine solche herangezogen wird. Denn es ist zu beachten, dass beispielsweise bei Positionierung eines weiteren Objekts, beispielsweise eines Menschen, vor der Teilstrecke bzw. dem Streckenabschnitt dieser nicht zwangsläufig noch dem Klassifikator unterfällt, dieser Zustand jedoch nur vorübergehend ist. Mithin werden bevorzugt bei der Überwachung diese Veränderungen als nicht einen Öffnungsvorgang anzeigende Veränderungen klassifiziert, wobei jedoch durch den Vergleich mit dem Referenzzustand zum Zeitpunkt der Klassifikation als Kandidatenstruktur die zu einem späteren Zeitpunkt erkennbare Öffnung dennoch festgestellt und korrekt interpretiert werden kann. Es sei angemerkt, dass insbesondere dann, wenn eine Analyse des in den Abstandsdaten abgebildeten Ablaufs des Öffnungsvorgangs erfolgen soll, solche Veränderungen, die nicht als ein sich öffnendes Garagentor interpretiert werden, dennoch zur späteren genaueren Analyse protokolliert, mithin abgespeichert, werden können.

Es sei darauf hingewiesen, dass es in diesem Zusammenhang auch denkbar ist, einen Filter zu verwenden, um dynamische, räumlich getrennt vor einem weiteren Objekt angeordnete Objekte aus der Umgebungskontur zu entfernen, diese mithin zu bereinigen, was aber gegenüber dem zuvor genannten Vorgehen weniger bevorzugt ist, dass sich auf den Referenzzustand zum Zeitpunkt der Klassifizierung als Kandidatenstruktur bezieht, da dann dynamische Vorgänge ohnehin aus dem Vergleichsprozess wieder herausfallen. Zunächst nicht entdeckte Kandidatenstrukturen, die erst durch Entfernung eines dynamischen Objekts als solche erkannt werden, erhalten dann entsprechend den späteren Referenzzustand als Vergleichsbasis, nachdem ja in der Überwachungsphase auch ständig auf neue, detektierte Kandidatenstrukturen hin eine Auswertung der Umgebungskontur erfolgt.

Unabhängig von der Verwendung einer Umgebungskontur kann bei Einsatz einer Überwachungsphase im erfindungsgemäßen Verfahren bevorzugt vorgesehen sein, dass nach Feststellung des Eintretens einer das Öffnen eines Garagentors anzeigenden Veränderung in Abhängigkeit von nach der Veränderung aufgenommenen, den hinter dem mutmaßlichen Garagentor liegenden Bereich beschreibenden Abstandsdaten eine Wahrscheinlichkeit für das Vorliegen einer Garage ermittelt wird, wobei das Öffnungskriterium bei Überschreitung eines Grenzwerts für die Wahrscheinlichkeit als erfüllt gilt. Mithin werden, bevor endgültig die Detektion und Lokalisierung einer einen Stellplatz für das Kraftfahrzeug bietenden Garage im Öffnungskriterium abgeschlossen wird, weitere plausibilisierende Untersuchungen angestellt, die sich insbesondere auf hinter dem geöffneten vermeintlichen Garagentor detektierte Abstandsdaten und gegebenenfalls weitere Sensordaten bezieht. Beispielsweise kann also überprüft werden, ob sich hinter dem vermeintlich geöffneten Garagentor ein (insbesondere durch Wände begrenzter) Raum befindet, der zum einen allseitig geschlossen ist, zum anderen aber hinreichend viel Platz zum Abstellen des Kraftfahrzeugs, also einen Stellplatz, bietet. Dadurch, dass der Öffnungsvorgang ja im Prinzip durch Beobachtung der Veränderung detektiert wurde, ist bekannt, wo sich die Innenseite der Garage befindet, so dass eine entsprechende Innenraumanalyse erfolgen kann. Eine derartige Innenraumanalyse kann beispielsweise überprüfen, ob Punkte existieren, die weit genug vom ehemaligen potentiellen Garagentor entfernt sind, dass das Kraftfahrzeug in dem Innenraum parken könnte. Je nachdem, wie viel von dem und wie verlässlich der Innenraum der Garage erfasst werden kann, ergibt sich eine Wahrscheinlichkeit dafür, dass tatsächlich eine Garage vorliegt, mithin eine Plausibilisierungshilfe.

Dabei können jedoch in diese Wahrscheinlichkeit auch weitere Informationen eingehen. So kann vorgesehen sein, dass bei der Ermittlung der Wahrscheinlichkeit noch wenigstens eine im Rahmen des Verfahrens ermittelte Zusatzinformation berücksichtigt wird, insbesondere der wenigstens eine durch die Kandidatenstruktur erfüllte Klassifikator und/oder eine durch Nachverfolgung des Garagentores in den Abstandsdaten ermittelte, den Verlauf und/oder die Art des Öffnungsvorgangs des Garagentores beschreibende Öffnungsinformation. Wie bereits erwähnt, können unterschiedliche Klassifikatoren verwendet werden, wobei einige auf typische Gegebenheiten im Fall einer Garage, mithin typische Garagenkonturen, abstellen. Zeigt also bereits der Klassifikator eine erhöhte Wahrscheinlichkeit für eine Garage an, kann dies entsprechend bei der Ermittlung der Wahrscheinlichkeit für das Vorliegen einer Garage im Öffnungskriterium nach Detektion einer entsprechenden Veränderung berücksichtigt werden, insbesondere hinsichtlich einer Erhöhung der Wahrscheinlichkeit für das Vorliegen einer Garage. Eine andere nützliche Zusatzinformation ergibt sich bei Beobachtung des Verlaufs des Öffnungsvorgangs selbst. Insbesondere ermöglicht die Beobachtung des Öffnungsvorgangs beispielsweise, typische Garagentortypen, beispielsweise Schiebetor, Schwingtor und dergleichen, zu identifizieren, welche ebenso die Wahrscheinlichkeit für das tatsächliche Vorliegen einer Garage erhöhen können. Hierzu sind, wie bereits angedeutet wurde, bevorzugt Veränderungen protokolliert worden, die noch nicht zur Erfüllung des Öffnungskriteriums führten und in der Vergangenheit lagen, um den Verlauf des Öffnungsvorgangs besser nachvollziehen zu können. Beispielsweise kann ein Schwingtor als Garagentortyp zunächst wie eine Verschiebung der Teilstrecke bzw. des Streckenabschnitts zum Kraftfahrzeug hin wirken, bevor sie/er plötzlich ganz verschwindet. Bei Schiebetoren verschwindet die Teilstrecke bzw. der Streckabschnitt im Allgemeinen recht kontinuierlich, während langsam die Öffnung freigegeben wird. Auch bei Schiebetoren, bei denen zunächst eine Verschiebung stattfindet, werden die verschobene Teilstrecke bzw. der verschobene Streckenabschnitt nicht schlagartig verschwinden, sondern langsam weniger werden.

Eine weitere bevorzugte Ausgestaltung der Erfindung in diesem Kontext sieht vor, dass bei einer unzureichenden Datenbasis zur Analyse des hinter dem mutmaßlichen Garagentor liegenden Bereichs aufgrund eines ungünstigen Einsichtswinkels in den hinter dem mutmaßlichen Garagentor liegenden Bereich eine Fahrerinformation zur Einnahme einer einen verbesserten Einsichtswinkel bietenden Datenaufnahmepose ausgegeben wird und/oder das Kraftfahrzeug wenigstens teilweise automatisch in die einen verbesserten Einsichtswinkel bietende Datenaufnahmepose verfahren wird. Ist also beispielsweise bei einer vorgesehenen Innenraumanalyse im Rahmen des Öffnungskriteriums der Einsichtswinkel in die potentielle Garage zu schlecht, kann der Fahrer angeregt werden, das Kraftfahrzeug in eine geeignete Aufnahmepose zu bewegen oder es kann bevorzugt vorgesehen sein, dass das Kraftfahrzeug automatisch in eine verbesserte Aufnahmepose verbracht wird, von der aus die für die Innenraumanalyse fehlenden Abstandsdaten (und gegebenenfalls weitere, auf den Innenraum bezogene Sensordaten) aufgenommen werden können. Auf diese Weise wird eine Innenraumanalyse und somit eine robuste, verlässliche Garagendetektion und -lokalisierung auch dann ermöglicht, wenn der ursprüngliche Einsichtswinkel nicht geeignet ist, mithin die Datenbasis für eine Innenraumanalyse unzureichend ist. Aufgrund geometrischer Betrachtungen lässt sich, insbesondere bei Verwendung einer Umgebungskontur, eine geeignete Datenaufnahmepose leicht ermitteln.

Wie bereits angedeutet wurde, ist es im Rahmen der vorliegenden Erfindung ferner besonders vorteilhaft, wenn bei einer nicht das Öffnen eines Garagentors anzeigenden Veränderung und/oder trotz Veränderungseintritt nicht erfülltem Öffnungskriterium die Kandidatenstruktur dennoch weiter überwacht wird. Dies gilt mithin auch, wenn der Klassifikator nicht mehr erfüllt ist. Würde mithin eine Struktur in der Umgebung des Kraftfahrzeugs, insbesondere eine Teilstruktur der Umgebungskontur, einmal als eine Kandidatenstruktur erkannt, wird diese Klassifizierung auch dann beibehalten, wenn durch einen dynamischen Vorgang der Klassifikator nicht mehr erfüllt wäre, so dass derartige dynamische, vorübergehende Faktoren nicht die grundsätzliche Fähigkeit zur Erkennung einer Garage bzw. eines Öffnungsvorgangs beeinflussen. Besonders zweckmäßig ist in diesem Kontext der Bezug auf den Referenzzustand zum Zeitpunkt der ersten Erfüllung des Klassifikators, mithin zum Zeitpunkt der Klassifizierung als Kandidatenstruktur. Wird beispielsweise als Garagentor ein Schwingtor verwendet, verändert sich zwar eine Linie in der Umgebungskontur zunächst durch Bewegung auf das Kraftfahrzeug zu, was aber nicht unmittelbar als ein (abgeschlossener bzw. fast abgeschlossener) Öffnungsvorgang detektiert wird. Da jedoch die entsprechende Kandidatenstruktur weiter überwacht wird, wird der Abschluss des Vorgangs festgestellt. Ähnliches gilt, wenn ein Mensch oder ein sonstiger dynamischer Gegenstand an einem potentiellen Garagentor, mithin einer Kandidatenstruktur, vorbeiläuft und kurzfristig dafür sorgt, dass der Klassifikator nicht mehr erfüllt ist, und dergleichen. Dies alles sind Veränderungen, die aber noch nicht unmittelbar ein Öffnen anzeigen.

Es kann ferner allgemein, mithin auch unabhängig von einer Überwachungsphase, bei deren Diskussion Derartiges bereits erwähnt wurde, vorgesehen sein, dass, insbesondere über eine Detektion einer Veränderung einer überwachten Kandidatenstruktur hinaus, den Verlauf und/oder die Art des Öffnungsvorgangs des Garagentores beschreibende Öffnungsinformationen durch Nachverfolgung des Garagentores in den Abstandsdaten ermittelt und zur Klassifizierung des Garagentores als einem von mehreren Garagentortypen zugehörig verwendet wird, wobei der Garagentortyp als Teil der Garageninformation gespeichert wird. Ein Garagentortyp stellt eine nützliche Information hinsichtlich der Zielpose dar, insbesondere bei der Ermittlung von Sicherheitsabständen von dem Garagentor aufgrund dessen Öffnungscharakteristik und dergleichen. Als Garagentortypen können insbesondere unterschiedliche Arten der Öffnung unterschieden werden, beispielsweise können Garagentortypen also Schiebetor, Schwingtor und dergleichen umfassen.

Ferner ist es besonders zweckmäßig, wenn bei Erfüllung des Öffnungskriteriums eine Breite des Garagentors ermittelt wird, wonach insbesondere hieraus als Teil der Garageninformation eine Stellplatzanzahl in der Garage abgeleitet wird. Ist mithin bekannt, wie breit das Garagentor ist, kann auch schlussgefolgert werden, wieviel Stellplätze die Garage üblicherweise bietet, so dass insbesondere die Zielpose gegebenenfalls so gewählt werden kann, dass auch alle Stellplätze in der Garage genutzt werden können. Doch die Breite des Garagentors gibt bereits einen Hinweis auf die Breite des Innenraums der Garage, so dass insbesondere für Plausibilitätsbetrachtungen hier eine nützliche Information vorliegt. Dabei ist es im Übrigen zweckmäßig, wenn zur Bestimmung der Breite bei einem durch Abschattung verdeckten Randpunkt des Garagentors dieser aus den Abstandsdaten abgeschätzt wird, insbesondere als die Längsposition (entlang des Tores) einer abschattenden, vorstehenden Ecke. Mithin können durch ungünstige Sichtwinkel verursachte Unsicherheiten in den Eckpunkten des Garagentors aufgrund einer Analyse der Abstandsdaten und der bekannten Ausrichtung des Garagentors kompensiert werden.

Vorzugsweise kann aus der im Rahmen des Öffnungskriteriums abgeleiteten Garageninformation zumindest eine einer Zielpose zuzuordnende Orientierung ermittelt werden. Bereits die Kenntnis, wo sich das Garagentor befindet, sowie gegebenenfalls ermittelte erste Informationen zum Garageninnenraum, sind ausreichend, um zumindest die Zielorientierung der Zielpose problemlos zu ermitteln, wobei beispielsweise eine Anordnung des Kraftfahrzeughecks parallel zum Längsverlauf des Garagentors angesetzt werden kann. Alternativ und/oder zusätzlich kann eine kontinuierliche Aktualisierung und/oder Neuberechnung der Zielpose unter Verwendung einer um Messdaten, insbesondere umfassend Abstandsdaten, zum Inneren der Garage ergänzten Garageninformation nach Eintritt des Öffnungskriteriums erfolgen. Das bedeutet, nachdem insbesondere ursprünglich Eckpunkte des Garagentors und dessen Ausrichtung als ursprünglicher Hinweis zur Zielorientierung in der Zielpose verwendet wurden, können nun je nach Szenario, Ort und Anzahl der verfügbaren Stellplätze verschiedene präferierte Zielposen anhand der Garageninformation eingepasst werden, wobei die Ermittlung der optimalen Zielpose periodisch und/oder wenigstens bei vorliegender neuer Garageninformation wiederholt wird, um von einem bei der Fahrt, insbesondere während des Einparkvorgangs, variierenden Sichtbereich der Umgebungssensoren, insbesondere auch der Abstandssensoren, profitieren zu können. Derartige Analysen hinsichtlich des Innenraums sind im Hinblick auf den Stand der Technik grundsätzlich bekannt, genau wie mögliche Bestimmungen von Zielposen, so dass dies hier nicht näher dargelegt werden soll.

Es ist im Rahmen der vorliegenden Erfindung bevorzugt, wenn die Einnahme der Zielpose automatisch durch ein zur Durchführung eines vollautomatischen Einparkvorgangs ausgebildetes Fahrzeugsystem erfolgt. Alternativ, aber weniger bevorzugt ist es auch denkbar, bezüglich der Zielpose bzw. einer zu deren Erreichen geeigneten Trajektorie Informationen, beispielsweise Fahranweisungen, an einen Fahrer auszugeben, um diesen zu der Zielpose zu leiten.

Letztlich beschreibt das erfindungsgemäße Verfahren eine bestimmte Ausgestaltung eines Fahrerassistenzsystems, hier eines Einparkassistenzsystems, das auch als ein Garagenpilot bezeichnet werden kann. Dieses Fahrerassistenzsystem kann vorsehen, dass die automatische Einparkfunktionalität durch einen Benutzer manuell angewählt wird. Nichtsdestotrotz ist es im Rahmen der vorliegenden Erfindung zweckmäßig, die hier beschriebene Überwachung der Fahrzeugumgebung auf Garagen mit geeigneten Stellplätzen, insbesondere aufgrund ihrer einfachen Realisierbarkeit, vorzugsweise bei Verwendung eines 2D-Laserscanners, unter bestimmten Bedingungen auch ohne vorherige Aktivierung einer Garagenpilot-Funktion durchzuführen. Beispielsweise kann zur Aktivierung der Überwachung eine Geschwindigkeitsschwelle festgelegt werden, so dass in einem niedrigen Geschwindigkeitsbereich immer nach möglicherweise vorhandenen Garagen gesucht wird. Auch eine ortsbasierte Aktivierung ist denkbar, beispielsweise dann, wenn eine GPS-Position festgestellt wird, die eine räumliche Nähe zu einer Heimatgarage anzeigt.

Neben dem Verfahren betrifft die vorliegende Erfindung auch ein Kraftfahrzeug, aufweisend wenigstens einen auf die Umgebung des Kraftfahrzeugs gerichteten, Abstandsdaten von Objektoberflächen zum Kraftfahrzeug liefernden Abstandssensor und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin auch die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: ein Kraftfahrzeug vor einer Garage,
- Fig. 3: eine Umgebungskontur zu einem ersten Zeitpunkt,
- Fig. 4: die Umgebungskontur der Fig. 3 zu einem zweiten Zeitpunkt,
- Fig. 5: eine Kandidatenstruktur zu einem ersten Zeitpunkt,
- Fig. 6: die Kandidatenstruktur zu einem zweiten Zeitpunkt,
- Fig. 7: die Kandidatenstruktur zu einem dritten Zeitpunkt,
- Fig. 8: die Kandidatenstruktur zu einem vierten Zeitpunkt,
- Fig. 9: eine Skizze zur Abschattung eines Eckpunkts eines Garagentors, und
- Fig. 10: schematisch ein erfindungsgemäßes Kraftfahrzeug.

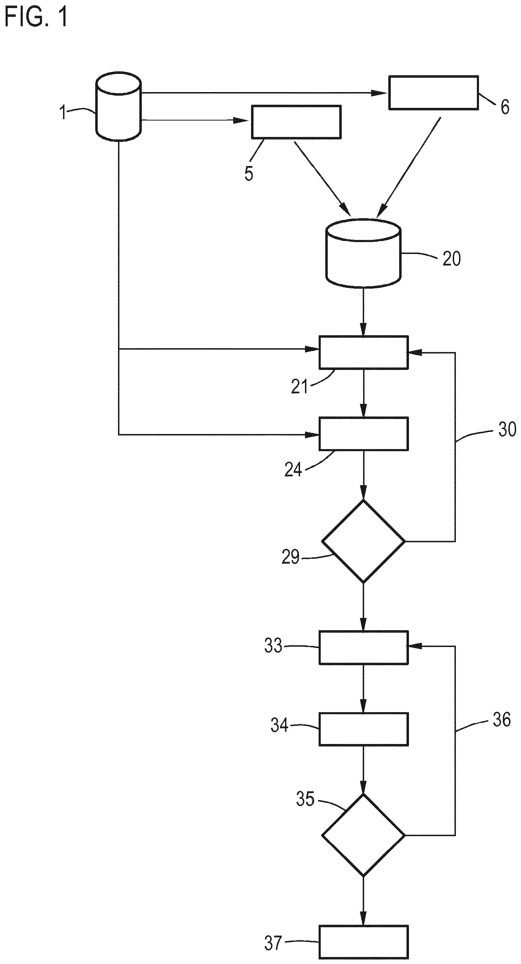

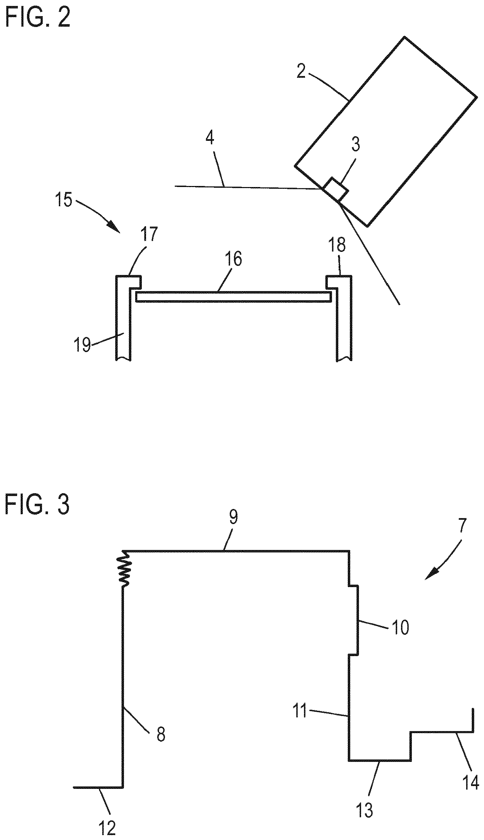

Fig. 1 zeigt einen Ablaufplan eines Ausführungsbeispiels eines erfindungsgemäßen Verfahrens, welches sich insbesondere mit der Detektion und Lokalisierung einer Garage, in die ein Einparkvorgang vorgenommen werden soll, beschäftigt. Dabei werden im vorliegenden Ausführungsbeispiel, für einen Teil der gezeigten Schritte ausschließlich, Abstandsdaten 1 eines 2D-Laserscanners des Kraftfahrzeugs verwendet. Fig. 2 zeigt beispielhaft ein erfindungsgemäßes Kraftfahrzeug 2 mit einem derartigen 2D-Laserscanner 3, welcher an der Front des Kraftfahrzeugs 2 angeordnet ist und einen horizontalen Öffnungswinkel seines Erfassungsbereichs 4 aufweist, der größer als 140° ist. Das Kraftfahrzeug kann zusätzlich weitere, beispielsweise zu den Seiten und/oder am Heck vorgesehene Laserscanner aufweisen, die ebenso Abstandsdaten liefern und mit denen dann eine 360°-Umfeldüberwachung des Kraftfahrzeugs 2 möglich ist.

Die Abstandsdaten des 2D-Laserscanners enthalten eine Umgebungskontur von Objekten in der Umgebung des Kraftfahrzeugs 2, die auf eine horizontale Ebene parallel zum Untergrund, auf dem sich das Kraftfahrzeug 2 befindet, bezogen ist, deren Höhe über dem Untergrund durch die Verbauhöhe des Laserscanners 3 bestimmt wird, welcher beispielsweise in und/oder benachbart zu einem Stoßfänger des Kraftfahrzeugs 2 verbaut sein kann.

Ist ein Überwachungskriterium erfüllt, gemäß dem ein Fahrerassistenzsystem für Einparkvorgänge in eine Garage die Umgebung des Kraftfahrzeugs 2 zur Detektion und Lokalisierung von Garagen mit wenigstens einem freien Stellplatz für das Kraftfahrzeug 2 überwachen soll, beträgt also beispielsweise die Geschwindigkeit des Kraftfahrzeugs weniger als ein vorgegebener Geschwindigkeitsschwellwert und/oder befindet sich das Kraftfahrzeug in einer vorbestimmten Umgebung um eine zuvor bestimmte Position, beispielsweise die Position einer Heimatgarage, werden die Abstandsdaten 1 kontinuierlich im Hinblick auf bestimmte Sachverhalte ausgewertet. Zunächst werden die einzelnen Teilstrukturen der Umgebungskontur durch Klassifikatoren 5, 6 dahingehend bewertet, ob es sich um Kandidatenstrukturen zur weiteren Überwachung, die mithin ein potentielles Garagentor enthalten könnten, handelt oder nicht. Dabei können Teilstrukturen auch mehrere Klassifikatoren 5, 6 erfüllen.

Fig. 3 zeigt beispielhaft eine Umgebungskontur 7, wie sie in den Abstandsdaten 1 enthalten sein kann. Der erste Klassifikator 5 überprüft nun, ob innerhalb der Umgebungskontur 7 Teilstrecken auftreten, die länger als eine Mindestlänge sind, die größer als die Breite des Kraftfahrzeugs 2 ist. Solche Teilstrecken könnten durch ein Garagentor gebildet sein oder aber ein solches enthalten. Im Beispiel der Fig. 3 erfüllen die geraden Teilstrecken 8, 9, 10 und 11 diesen Klassifikator 5, so dass sie mithin als Kandidatenstrukturen ausgewählt werden. Die Teilstrecken 12, 13 und 14 sind jedoch zu kurz.

Der Klassifikator 6 führt eine genauere Analyse der Teilstrukturen durch. Er nutzt das Hintergrundwissen, dass viele Garagen im Bereich des Garagentors eine bestimmte Garagenkontur zeigen. In Fig. 2 ist beispielhaft eine Garage 15 angedeutet. Ersichtlich ist das Garagentor 16 dabei zurückgesetzt zwischen zwei vorstehenden, gleichartigen Begrenzungsstrukturen 17, 18 der Wand 19 der Garage 15 angeordnet. Mithin prüft der Klassifikator 6, ob eine solche Konfiguration auch in der Umgebungskontur 7 enthalten ist. Dies ist im Bereich der Teilstrecke 10 ersichtlich der Fall, so dass dort eine Kandidatenstruktur gegeben ist, die sowohl den Klassifikator 5 als auch den Klassifikator 6 erfüllt. Welche Klassifikatoren 5, 6 erfüllt sind, wird im Übrigen den Kandidatenstrukturen zugeordnet gespeichert.

Ergebnis der Klassifikation durch die Klassifikatoren 5, 6 sind also Kandidatenstrukturen 20, die in einem Schritt 21 auf Veränderungen überwacht werden. Dabei sei darauf hingewiesen, dass, auch wenn dies aus Übersichtlichkeitsgründen in Fig. 1 nicht so gezeigt ist, die aktuelle Umgebungskontur 7 selbstverständlich ständig weiter auf das Auftreten neuer Kandidatenstrukturen 20 bzw. auf das Wegfallen von nicht mehr sichtbaren Kandidatenstrukturen 20 überprüft wird. Ferner sei angemerkt, dass der Zustand, mithin Verlauf, einer Kandidatenstruktur 20 zum Zeitpunkt ihrer ersten Klassifizierung als Kandidatenstruktur 20 als Referenzzustand (bzw. Referenzverlauf) abgespeichert wird. Der Schritt 21 dient also dazu, den aktuellen Zustand, mithin den aktuellen Verlauf, jeder Kandidatenstruktur 20 mit dem gespeicherten Referenzzustand zu vergleichen.

Tritt nun eine Veränderung auf, wird diese aufgrund eines Ausschlusskriteriums dahingehend überprüft, ob die Veränderung auf eine nun geöffnete Garage bzw. eindeutig auf einen Öffnungsvorgang hinweist. Läuft beispielsweise ein Mensch, mithin ein wenig ausgedehntes Objekt, in der Umgebungskontur 7 an der Teilstrecke 9 entlang, erscheint diese verändert (Kontur des Menschen verdeckt einen Teil der Teilstrecke 9), jedoch ist der nicht mehr sichtbare Teil der Teilstrecke 9 zu klein, mithin kürzer als die Mindestlänge, so dass das Kraftfahrzeug 2 dort nicht hineinfahren könnte, zudem würde der Mensch ohnehin die Einfahrt versperren. Nichtsdestotrotz wird auch bei einer solchen Veränderung, die nicht als ein Öffnen eines Garagentors anzeigend klassifiziert wird, die entsprechende Kandidatenstruktur 20 weiter überwacht, und zwar immer mit Bezug auf den Referenzzustand.

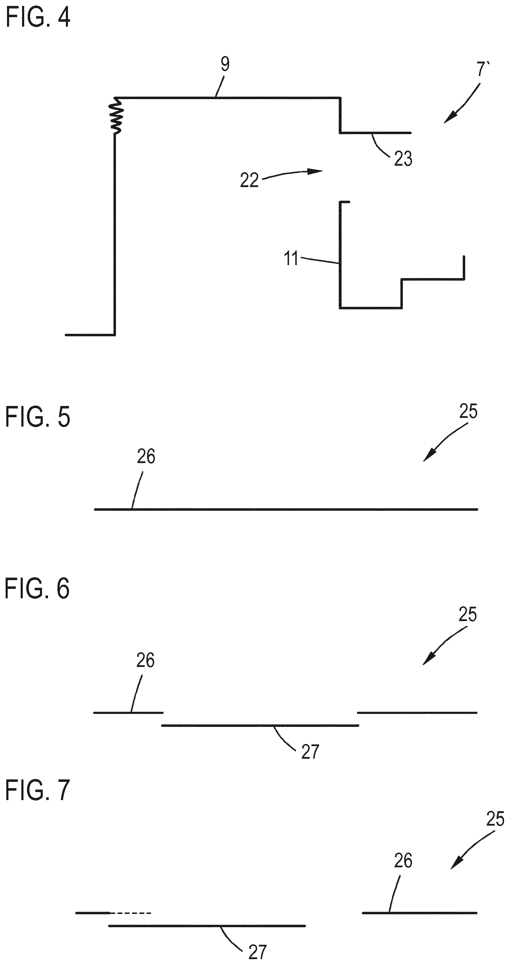

Fig. 4 zeigt die Umgebungskontur 7', wie sie sich zu einem späteren Zeitpunkt darstellt. Dort ist nun eine ein Öffnen eines Garagentors anzeigende Veränderung eingetreten, denn im Bereich 22 ist die Teilstrecke 10, also der etwas zurückgesetzte Streckenabschnitt, weggefallen, so dass eine Öffnung entstanden ist, die die Mindestlänge überschreitet und mithin eine Einfahrt zu einer Garage darstellen kann, wobei ein Teil der Begrenzung 23 des Innenraums der mutmaßlichen Garage nun auch zu sehen ist.

Tritt eine solche Veränderung auf, wird von der Überwachungsphase in eine Analyse- und Plausibilisierungsphase übergegangen. Dort werden in einem Schritt 24 verschiedene Auswertungsvorgänge im Rahmen eines Öffnungskriteriums vorgenommen, um eine Wahrscheinlichkeit für das Vorliegen einer Garage zu bestimmen. In diese Wahrscheinlichkeit geht zunächst ein, welche und wie viele der Klassifikatoren 5, 6 die veränderte Kandidatenstruktur 20 erfüllt hat. Stellt der entsprechende Klassifikator 5, 6, hier beispielhaft der Klassifikator 6, auf eine typische Garagenkontur ab, ist die Wahrscheinlichkeit höher, dass bei einer ein potentielles Öffnen eines Garagentors anzeigenden Veränderung tatsächlich auch eine Garage vorliegt, so dass die Wahrscheinlichkeit für das Vorliegen einer Garage entsprechend erhöht wird.

Weitere Auswertungsvorgänge im Rahmen des Öffnungskriteriums, also im Schritt 24, betreffen den nun sichtbaren Innenraum der potentiellen Garage, das bedeutet, es wird eine Innenraumanalyse durchgeführt, worin weiterhin die Abstandsdaten 1 eingehen. Dabei wird insbesondere versucht festzustellen, ob der durch das Wegfallen der Teilstrecke 10 freigelegte Innenraum überhaupt einen hinreichend großen Stellplatz für das Kraftfahrzeug 2 bietet. Beispielsweise können als Teilkriterium hier Überprüfungen angestellt werden, ob allseitig Begrenzungen vorliegen, ob Punkte im hinteren Teil bestehen, die ein Einführen des Kraftfahrzeugs 2 mit seiner gesamten Länge erlauben und dergleichen.

In Fig. 4 ist gleich ein Spezialfall dargestellt, in dem nämlich nur ein Teil der Begrenzung 23 aufgrund des Sichtwinkels wirklich erkennbar ist. In einem solchen Fall ist also eine ungenügende Datenbasis für eine Innenraumanalyse gegeben, so dass im Fahrerassistenzsystem automatisch aufgrund der ja bekannten Geometrie (die Lage und Ausrichtung des Garagentors sowie innen und außen sind ja bekannt) eine Datenaufnahmepose für das Kraftfahrzeug 2 ermittelt wird, aus der weiterer Einblick in den freigelegten Innenraum genommen werden kann. Dann kann die Innenraumanalyse, die Einfluss auf die Wahrscheinlichkeit für das Vorliegen einer Garage (in der ein freier Stellplatz vorliegt) nimmt, vervollständigt werden.

Es sei angemerkt, dass sich eine weitere Zusatzinformation (neben der Erfüllung von Klassifikatoren 5, 6), die Einfluss auf die Wahrscheinlichkeit für das Vorliegen einer Garage nehmen kann, auch aus einer Klassifizierung des potentiellen Garagentores als ein bestimmter Garagentortyp, beispielsweise Schiebetor oder Schwingtor, anhand einer Betrachtung des Verlaufs des Öffnungsvorgangs ergeben kann. Um dies zu ermöglichen, werden insbesondere auch Veränderungen, die noch nicht als das Öffnen eines Garagentors anzeigend klassifiziert wurden, zur Analyse des Verlaufs abgespeichert.

Dies sei hinsichtlich des auf eine andere Kandidatenstruktur 25 bezogenen Beispiels der Figuren 5 bis 8 näher erläutert. Dort ist die Kandidatenstruktur 25 ersichtlich eine Teilstrecke 26, mithin ist der Klassifikator 5 erfüllt. In Fig. 6, zu einem zweiten Zeitpunkt, ist eine Veränderung eingetreten: Ein Unterabschnitt 27 der Teilstrecke 26, der in seiner Länge die Mindestlänge überschreitet, hat sich auf das Kraftfahrzeug zubewegt. Dies zeigt noch keinen erfolgten Öffnungsvorgang eines Garagentors an, da ja der Weg durch die nun entstandene Unterbrechung in der Teilstrecke 26 durch das herausgetrennte Objekt 27 versperrt ist. Nichtsdestotrotz wird die Kandidatenstruktur 25, wie bereits dargelegt wurde, weiterhin überwacht, und zwar bezüglich des Referenzzustands (vgl. Fig. 5).

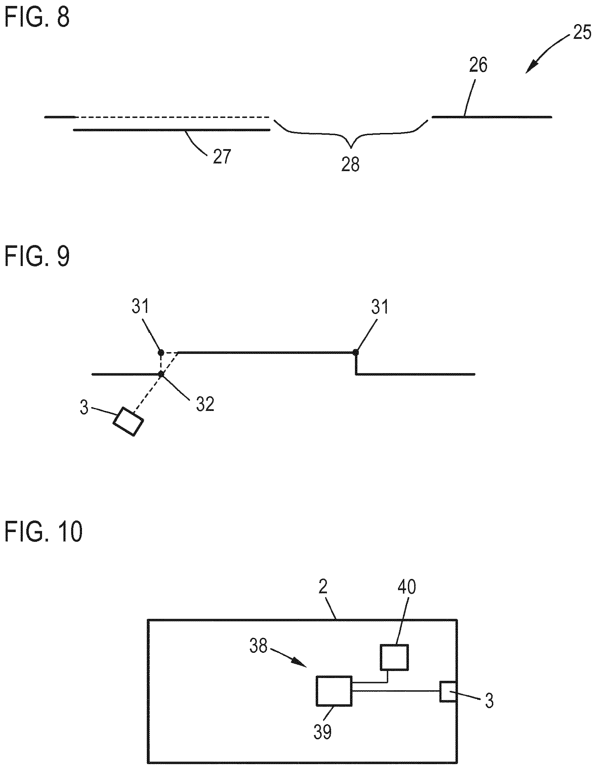

Zu einem weiteren Zeitpunkt, Fig. 7, wurde der Unterabschnitt 27 ersichtlich nach links bewegt, wo er einen Teil der Teilstrecke 26 (gestrichelt dargestellt) nun überdeckt. In Fig. 8 ist zu einem letzten dargestellten Zeitpunkt der Vorgang abgeschlossen: Der Unterabschnitt 27, der einem Schiebetor entspricht, hat eine Öffnung 28 vollständig freigegeben, die die Mindestlänge in ihrer Breite überschreitet und mithin eine Veränderung gegenüber dem Referenzzustand in Fig. 5 darstellt, der auf das Öffnen eines Garagentors hindeutet. Betrachtet man den zeitlichen Verlauf der Figuren 5 bis 8, lässt sich anhand des langsamen Auftretens der Öffnung 28 der Vorgang des Öffnens eines Schiebetors identifizieren, so dass das Garagentor hier als vom Garagentortyp Schiebetor identifiziert wird. Dies unterscheidet das hier illustrierte Garagentor von einem Schwingtor, bei dem es aufgrund des Schwingens auf das Kraftfahrzeug zu auch zunächst so wirken kann, als ob sich der Streckenabschnitt bzw. die Teilstrecke auf das Kraftfahrzeug zubewegt, dann jedoch verschwindet sie plötzlich ganz. Aufgrund des Vorliegens eines potentiellen Garagentors vom Schiebetortyp ist die Wahrscheinlichkeit weiter erhöht, dass eine Garage vorliegt.

Das Beispiel der Figuren 5 bis 8 ist lediglich zur besseren Erläuterung gewählt; eine Vielzahl üblicher Schiebetore kommt ohne eine Querverschiebung aus und kann über die langsam zunehmende Öffnung allein erkannt werden.

Es sei an dieser Stelle nochmals darauf hingewiesen, dass aufgrund der ständigen Weiterüberwachung der Kandidatenstrukturen 20, 25 und des Bezugs auf den Referenzzustand langsame Öffnungsvorgänge und Abschattungen, beispielsweise beim manuellen Öffnen des Garagentors durch den Fahrer, toleriert werden.

In einem Schritt 29 (vgl. wiederum Fig. 1) wird überprüft, ob die Wahrscheinlichkeit für das Vorliegen einer Garage einen Grenzwert überschreitet. Ist dies nicht der Fall, wird nicht von einer Garage ausgegangen, und die Überwachung im Schritt 21 wird fortgesetzt, Pfeil 30. Im anderen Fall jedoch wurde erfolgreich eine Garage, die einen Stellplatz für das Kraftfahrzeug 2 bereithält, detektiert. Zu dieser Garage liegen bereits eine Anzahl diese charakterisierende und lokalisierende Garageninformationen vor, und zwar neben der Position und Ausrichtung des Tores (bzw. jetzt gegebenen Öffnung) auch der Garagentortyp sowie bei der Innenraumanalyse entstandene Garageninformationen zum Innenraum. Als weitere Garageninformation wird im Übrigen noch die Breite des Garagentores, das sich geöffnet hat, bestimmt. Sollte, wie in Fig. 9 dargestellt, ein Randpunkt 31 eines Garagentors aufgrund einer Abschattung nicht direkt bestimmt werden können, wird der entsprechende Randpunkt 31 anhand der Abstandsdaten 1 abgeschätzt, in den die Längsposition entlang des Garagentores entlang der abschattenden, vorstehenden Ecke 32 verwendet wird. Aus der Breite des Garagentores kann als Teil der Garageninformation eine vermutlich vorhandene Stellplatzanzahl in der Garage abgeleitet werden.

In einem Schritt 33 wird dann eine Zielpose, in der das Kraftfahrzeug auf dem bzw. an einem Stellplatz in der Garage abgestellt werden soll, ermittelt. Aus der Position und Ausrichtung des Tores selbst ergibt sich bereits eine Zielorientierung der Zielpose, welche aufgrund von Informationen zum Innenraum entsprechend verfeinert wird. Während des nun stattfindenden Fahrbetriebs zum Erreichen der Zielpose, Schritt 34, werden weiter Abstandsdaten 1 und weitere Messdaten gesammelt, um die Zielpose genauer bestimmen zu können. Tatsächlich wird in einem Schritt 35 kontinuierlich überprüft, ob die Zielpose bereits eingenommen wurde; ist dies nicht der Fall, wird die Zielpose gemäß dem Pfeil 36 weiter optimiert und berechnet, indem aufgrund des Fahrbetriebs im Schritt 34 neu hinzugekommene Abstandsdaten/Messdaten ausgenutzt werden. Dies ist letztlich die dritte Phase des Verfahrens, nämlich die Zielposenberechnung. Im vorliegenden Ausführungsbeispiel erfolgt der Fahrbetrieb im Schritt 34 im Übrigen automatisch unter Nutzung eines zur Durchführung eines vollautomatischen Einparkvorgangs ausgebildeten Fahrzeugsystems des Kraftfahrzeugs 2. Wird im Schritt 35 dann festgestellt, dass die Zielpose erreicht wurde, endet das Verfahren in einem Schritt 37.

Fig. 10 zeigt schließlich schematisch das Kraftfahrzeug 2 genauer. Es weist, wie bereits dargelegt wurde, den 2D-Laserscanner 3 auf, kann jedoch auch weitere derartige 2D-Laserscanner, beispielsweise zu den Seiten und am Heck, aufweisen. Das Kraftfahrzeug 2 weist ferner das genannte Fahrerassistenzsystem 38, welches die Funktion zum Einparken in Garagen bietet, auf. Dem Fahrerassistenzsystem 38 ist ein Steuergerät 39 zugeordnet, das zur Durchführung des erfindungsgemäßen Verfahrens ausgebildet ist. Es kommuniziert dazu mit dem Laserscanner 3, dem zur Durchführung des vollautomatischen Einparkvorgangs ausgebildeten Fahrzeugsystem 40 sowie weiteren Fahrzeugsystemen.

## Patentansprüche

1. Verfahren zur Detektion und Lokalisierung einer wenigstens einen Stellplatz für ein Kraftfahrzeug (2) bietenden Garage (15) in dem Kraftfahrzeug (2), wobei das Kraftfahrzeug (2) wenigstens einen auf die Umgebung des Kraftfahrzeugs (2) gerichteten, Abstandsdaten (1) von Objektoberflächen zum Kraftfahrzeug (2) liefernden Abstandssensor aufweist und wobei nach der Detektion und Lokalisierung abhängig von einer hierbei ermittelten Garageninformation eine Zielpose zum Abstellen des Kraftfahrzeugs (2) auf wenigstens einem des wenigstens einen Stellplatzes bestimmt wird,
**dadurch gekennzeichnet,**
**dass** die Abstandsdaten (1) zur Detektion eines sich öffnenden Garagentors (16) anhand eines Öffnungskriteriums ausgewertet werden, wobei bei erfülltem Öffnungskriterium eine Garage (15) detektiert und anhand der aus den Abstandsdaten (1) ableitbaren Position des Garagentors (16) eine Lokalisierungsinformation der Garage (15) als Teil der Garageninformation bestimmt wird, wobei während einer Überwachungsphase potentielle geschlossene Garagentore (16) anzeigende Kandidatenstrukturen (20, 25) in den Abstandsdaten (1) identifiziert werden und mittels des Öffnungskriteriums auf eine das Öffnen eines Garagentors (16) anzeigende Veränderung überwacht werden.

2. Verfahren nach Anspruch 1,
**dadurch gekennzeichnet,**
**dass** als wenigstens ein Abstandssensor ein Laserscanner (3) verwendet wird.

3. Verfahren nach Anspruch 1 oder 2,
**dadurch gekennzeichnet,**
**dass** ein horizontaler Öffnungswinkel des Erfassungsbereichs (4) wenigstens eines des wenigstens einen Abstandssensors größer als 120° ist und/oder durch eine Mehrzahl von Abstandssensoren die Umgebung des Kraftfahrzeugs (2) in einem 360°-Winkelintervall vermessbar ist.

4. Verfahren nach einem der vorangehenden Ansprüche,
**dadurch gekennzeichnet,**
**dass** zur Extraktion von Kandidatenstrukturen (20, 25) eine auf eine bestimmte Höhe über dem befahrenen Untergrund bezogene, aus dem Untergrund emporragende Objekte in der Umgebung des Kraftfahrzeugs (2) in ihrem horizontalen Verlauf beschreibende Umgebungskontur (7, 7') aus den Abstandsdaten (1) ermittelt wird, wobei wenigstens ein Klassifikator (5, 6) zur Identifikation von Kandidatenstrukturen (20, 25) in der Umgebungskontur (7, 7') verwendet wird.

5. Verfahren nach Anspruch 4,
**dadurch gekennzeichnet,**
**dass** wenigstens einer des wenigstens einen Klassifikators (5, 6) eine erste Mindestlänge überschreitende, gerade Teilstrecken (8, 9, 10, 11) in der Umgebungskontur (7, 7') detektiert und/oder wenigstens einer des wenigstens einen Klassifikators (5, 6) einen zwischen zwei gleichartigen Begrenzungsstrukturen (17, 18) zurückgesetzt befindlichen Streckenabschnitt einer zweiten Mindestlänge in der Umgebungskontur (7, 7') detektiert.

6. Verfahren nach einem der vorangehenden Ansprüche,
**dadurch gekennzeichnet,**
**dass** nach Feststellung des Eintretens einer das Öffnen eines Garagentors (16) anzeigenden Veränderung in Abhängigkeit von nach der Veränderung aufgenommenen, den hinter dem mutmaßlichen Garagentor (16) liegenden Bereich beschreibenden Abstandsdaten (1) eine Wahrscheinlichkeit für das Vorliegen einer Garage (15) ermittelt wird, wobei das Öffnungskriterium bei Überschreitung eines Grenzwerts für die Wahrscheinlichkeit als erfüllt gilt.

7. Verfahren nach Anspruch 6,
**dadurch gekennzeichnet,**
**dass** bei der Ermittlung der Wahrscheinlichkeit noch wenigstens eine im Rahmen des Verfahrens ermittelte Zusatzinformation berücksichtigt wird.

8. Verfahren nach einem der vorangehenden Ansprüche,
**dadurch gekennzeichnet,**
**dass** bei einer nicht das Öffnen eines Garagentors (16) anzeigenden Veränderung und/oder trotz Veränderungseintritt nicht erfülltem Öffnungskriterium die Kandidatenstruktur (20, 25) dennoch weiter überwacht wird.

9. Verfahren nach einem der vorangehenden Ansprüche,
**dadurch gekennzeichnet,**
**dass** den Verlauf und/oder die Art des Öffnungsvorgangs des Garagentores (16) beschreibende Öffnungsinformationen durch Nachverfolgung des Garagentores (16) in den Abstandsdaten (1) ermittelt und zur Klassifizierung des Garagentores (16) als einem von mehreren Garagentortypen zugehörig verwendet wird, wobei der Garagentortyp als ein Teil der Garageninformation gespeichert wird.

10. Verfahren nach einem der vorangehenden Ansprüche,
**dadurch gekennzeichnet,**
**dass** bei Erfüllung des Öffnungskriteriums eine Breite des Garagentors (16) ermittelt wird.

11. Verfahren nach einem der vorangehenden Ansprüche,
**dadurch gekennzeichnet,**
**dass** aus der im Rahmen des Öffnungskriteriums abgeleiteten Garageninformation zumindest eine einer Zielpose zuzuordnende Orientierung ermittelt wird und/oder eine kontinuierliche Aktualisierung und/oder Neuberechnung der Zielpose unter Verwendung einer um Messdaten zum Inneren der Garage (15) ergänzten Garageninformation nach Eintritt des Öffnungskriteriums erfolgt.

12. Verfahren nach einem der vorangehenden Ansprüche,
**dadurch gekennzeichnet,**
**dass** die Einnahme der Zielpose automatisch durch ein zur Durchführung eines vollautomatischen Einparkvorgangs ausgebildetes Fahrzeugsystem (40) erfolgt.

13. Kraftfahrzeug (2), aufweisend wenigstens einen auf die Umgebung des Kraftfahrzeugs (2) gerichteten, Abstandsdaten (1) von Objektoberflächen zum Kraftfahrzeug (2) liefernden Abstandssensor und ein zur Durchführung eines Verfahrens nach einem der vorangehenden Ansprüche ausgebildetes Steuergerät (39).

## Claims

1. Method for detecting and locating in a motor vehicle (2) a garage (15) providing at least one parking space for the motor vehicle (2), wherein the motor vehicle (2) has at least one distance sensor which is directed to the surroundings of the motor vehicle (2) and delivers distance data (1) from object surfaces to the motor vehicle (2) and wherein after the detection and location, depending on garage information determined in this way, a target pose is determined for parking the motor vehicle (2) in at least one of the at least one parking spaces, **characterised in that** that the distance data (1) for detecting an opening garage door (16) are evaluated with reference to an opening criterion, wherein when the opening criterion is met a garage (15) is detected and with reference to the position of the garage door (16) derived from the distance data (1) location information for the garage (15) is determined as part of the garage information, wherein during a monitoring phase prospective structures (20, 25) indicating potential closed garage doors (16) are identified in the distance data (1) and by means of the opening criterion are monitored for a change indicating the opening of a garage door (16).

2. Method according to claim 1, **characterised in that** a laser scanner (3) is used as at least one distance sensor.

3. Method according to claim 1 or 2, **characterised in that** a horizontal opening angle of the detecting area (4) of at least one of the at least one distance sensors is greater than 120° and/or the surroundings of the motor vehicle (2) can be measured by means of a plurality of distance sensors in a 360° angle range.

4. Method according to any of the preceding claims, **characterised in that** for the extraction of prospective structures (20, 25) a surrounding contour (7, 7') which relates to a specific height above the driven ground and describes objects sticking up from the ground in the surrounding area of motor vehicle (2) in their horizontal orientation is determined from the distance data (1), wherein at least one classifier (5, 6) is used for identifying prospective structures (20, 25) in the surrounding contour (7, 7').

5. Method according to claim 4, **characterised in that** at least one of the least one classifiers (5, 6) detects straight part sections (8, 9, 10, 11) exceeding a first minimum length in the surrounding contour (7, 7') and/or at least one of the at least one classifiers (5, 6) detects a portion of a second minimum length in the surrounding contour (7, 7') set back between two similar containment structures (17, 18).

6. Method according to any of the preceding claims, **characterised in that** after the occurrence of a change indicating the opening of a garage door (16) has been established as a function of distance data (1) which has been recorded after the change and describes the area behind the suspected garage door (16), the probability of the existence of a garage (15) is determined, wherein the opening criterion is considered to have been met when a threshold value for the probability has been exceeded.

7. Method according to claim 6, **characterised in that** when determining the probability at least one further piece of additional information determined as part of method is taken into consideration.

8. Method according to any of the preceding claims, **characterised in that** with a change that does not indicate the opening of a garage door (16) and/or opening criterion that has not been met despite the change, the prospective structure (20, 25) is still monitored further.

9. Method according to any of the preceding claims, **characterised in that** opening information describing the progression and/or the type of opening process of the garage door (16) is determined in the distance data (1) by tracking the garage door (16) and is used for classifying the garage door (16) as one of several garage door types, wherein the garage door type is saved as a part of the garage information.

10. Method according to any of the preceding claims, **characterised in that** when the opening criterion is met a width of the garage door (16) is detected.

11. Method according to any of the preceding claims, **characterised in that** from the garage information derived from the opening criterion at least one orientation to be assigned to a target pose is determined and/or there is a continual updating and/or recalculation of the target pose by using garage information supplemented by measurement data to the inside of the garage (15) after the occurrence of the opening criterion.

12. Method according to any of the preceding claims, **characterised in that** the adoption of the target pose is performed automatically by a vehicle system (40) designed to perform a fully automatic parking process.

13. Motor vehicle (2), having at least one distance sensor which is directed to the surroundings of the vehicle (2) and delivers distance data (1) of object surfaces to the motor vehicle (2) and a control device (39) designed for performing a method according to any of the preceding claims.

## Revendications

1. Procédé de détection et de localisation dans le véhicule à moteur (2) d'un stationnement (15) offrant au moins une place de stationnement pour un véhicule à moteur (2), dans lequel le véhicule à moteur (2) comporte au moins un capteur de distance dirigé vers l'environnement du véhicule (2), délivrant des données de distance (1) des surfaces d'objets vers le véhicule à moteur (2), et dans lequel, après la détection et la localisation en fonction d'une information de stationnement déterminée, une position cible est définie pour le stationnement du véhicule à moteur (2) sur au moins une de la au moins une place de stationnement,
**caractérisé en ce que**
les données de distance (1) pour la détection d'une porte de garage (16) qui s'ouvre sont évaluées au moyen d'un critère d'ouverture,
dans lequel lorsque le critère d'ouverture est rempli, un stationnement (15) est détecté et une information de localisation du stationnement (15) est définie en tant que partie de l'information de stationnement au moyen de la position pouvant être déduite des données de distance (1) de la porte de garage (16), dans lequel pendant une phase de surveillance, des structures potentielles (20, 25) affichant des portes de garage potentiellement fermées (16) sont identifiées dans les données de distance (1) et sont surveillées au moyen du critère d'ouverture au niveau d'une modification affichant l'ouverture d'une porte de garage (16).

2. Procédé selon la revendication 1,
**caractérisé en ce**
**qu'**un scanner laser (3) est utilisé en tant qu'au moins un capteur de distance.

3. Procédé selon la revendication 1 ou 2,
**caractérisé en ce**
**qu'**un angle d'ouverture horizontal de la plage de détection (4) d'au moins un du au moins un capteur de distance est supérieur à 120° et/ou une pluralité de capteurs de distance permet de mesurer l'environnement du véhicule à moteur (2) selon un intervalle angulaire de 360°.

4. Procédé selon l'une quelconque des revendications précédentes,
**caractérisé en ce que**
pour l'extraction des structures potentielles (20, 25), un contour environnant (7, 7') rapporté à une hauteur définie au-dessus du sol parcouru, décrivant dans leur tracé horizontal des objets se dressant au-dessus du sol dans l'environnement du véhicule à moteur (2), est déterminé à partir des données de distance (1), dans lequel au moins un classificateur (5, 6) est utilisé pour l'identification des structures potentielles (20, 25) dans le contour environnant (7, 7').

5. Procédé selon la revendication 4,
**caractérisé en ce que**
au moins un du au moins un classificateur (5, 6) détecte des parcours partiels droits (8, 9, 10, 11) dépassant une première longueur minimale dans le contour environnant (7, 7') et/ou au moins un du au moins un classificateur (5, 6) détecte un tronçon de parcours se trouvant en retrait entre deux structures de délimitation de même type (17, 18) d'une seconde longueur minimale dans le contour environnant (7, 7').

6. Procédé selon l'une quelconque des revendications précédentes,
**caractérisé en ce que**
après constatation de l'apparition d'une modification affichant l'ouverture d'une porte de garage (16) en fonction des données de distance (1) enregistrées après la modification, décrivant la zone située derrière la porte de garage (16) supposée, une probabilité de l'existence d'un stationnement (15) est déterminée, le critère d'ouverture étant considéré comme rempli lorsqu'une valeur seuil de probabilité est dépassée.

7. Procédé selon la revendication 6,
**caractérisé en ce que**
lors de la détermination de la probabilité, au moins une information supplémentaire déterminée dans le cadre du procédé est encore prise en compte.

8. Procédé selon l'une quelconque des revendications précédentes,
**caractérisé en ce que**
en cas de modification n'affichant pas l'ouverture d'une porte de garage (16) et/ou en cas de critère d'ouverture non rempli malgré la survenance d'une modification, la structure potentielle (20, 25) continue toutefois à être surveillée.

9. Procédé selon l'une quelconque des revendications précédentes,
**caractérisé en ce que**
des informations d'ouverture décrivant le parcours et/ou le type de procédé d'ouverture de la porte de garage (16) sont déterminées par le suivi de la porte de garage (16) dans les données de distance (1) et sont utilisées pour la classification de la porte de garage (16) comme appartenant à une des plusieurs portes de garage, le type de porte de garage étant mémorisé en tant que partie de l'information de stationnement.

10. Procédé selon l'une quelconque des revendications précédentes,
**caractérisé en ce que**
lorsque le critère d'ouverture est rempli, une largeur de porte de garage (16) est déterminée.

11. Procédé selon l'une quelconque des revendications précédentes,
**caractérisé en ce que**
au moins une orientation affectée à une position cible est déterminée à partir des informations de stationnement déduites dans le cadre du critère d'ouverture et/ou une actualisation continue et/ou un nouveau calcul de la position cible a lieu à l'aide d'une information de stationnement complétée par des données de mesure sur l'intérieur du stationnement (15) après entrée du critère d'ouverture.

12. Procédé selon l'une quelconque des revendications précédentes,
**caractérisé en ce que**
la prise de la position cible a lieu automatiquement par un système de véhicule (40) conçu pour la réalisation d'une manœuvre de stationnement entièrement automatique.

13. Véhicule à moteur (2) comprenant au moins un capteur de distance dirigé vers l'environnement du véhicule à moteur (2), délivrant des données de distance (1) des surfaces d'objets vers le véhicule à moteur (2) et un appareil de commande (39) conçu pour la réalisation d'un procédé selon l'une quelconque des revendications précédentes.
